# EUROPÄISCHE PATENTSCHRIFT

(11) **EP 2 674 314 B1**
(45) Veröffentlichungstag und Bekanntmachung des Hinweises auf die Patenterteilung: **30.05.2018**
(21) Anmeldenummer: 13165408.9
(22) Anmeldetag: 25.04.2013
(51) Int. Cl.: B60K 11/08, F16H 21/10, F01P 7/10, F16H 21/44

(54) **Übertragungselement für ein Kraftfahrzeug**
Transfer element for a motor vehicle
Elément de transmission pour un véhicule automobile

(30) Priorität: 13.06.2012 DE 102012011595
(43) Veröffentlichungstag der Anmeldung: 18.12.2013
(73) Patentinhaber: Magna Exteriors (Germany) GmbH, 66280 Sulzbach (DE)
(72) Erfinder: Knauer, Bernd, 73733 Esslingen (DE)
(74) Vertreter: Rausch, Gabriele

(56) Entgegenhaltungen:
- DE-A1-102008 013 422
- DE-A1-102008 061 054
- JP-U- S5 968 126
- US-A- 1 699 020

## Beschreibung

Die Erfindung betrifft ein Übertragungselement für den steuerbaren Lufteinlass eines Kraftfahrzeuges nach der Art von Anspruch 1.

In modernen Kraftfahrzeugen wird zur Verbesserung des Warmlauftverhaltens des Motors der Luftstrom zum Wärmetauscher mittels verstellbaren Elementen gesteuert. Bei den verstellbaren Elementen, den Schließelementen handelt es sich zumeist um eine Anzahl schwenkbar gelagerter Lamellen, wobei deren Schwenkachsen parallel oder, je nach Design des Kühlergrills unter einem Winkel zueinander orientiert und diese insgesamt in einem Rahmen schwenkbar angeordnet sind. Der Rahmen samt der Lamellenanordnung ist dem Kühlergrill nachgeordnet und dem Wärmetauscher des Motors vorgeordnet. Durch Schließen der Frischluftzufuhr während des Warmlaufens bzw. durch Steuern der Kühlluftmenge entsprechend der Motortemperatur wird die optimale Betriebstemperatur schneller erreicht bzw. kann innerhalb eines engen Temperaturbereiches gehalten werden.

Beispiele für die beschriebenen Einrichtungen zeigen die EP 2 233 341 A1, die EP 2 233 342 A1, die EP 2 325 035 A1, die DE 10 2008 049 010 A1, die DE 20 2005 010 683 U1 sowie die DE 60 2004 007 338 T2.

Die gezeigten Schließelemente sind als längliche Flächenelemente nach Art einer lamelle in im Wesentlichen ebener Form ausgebildet und um eine meist mittig durch das Flächenelement gehende Achse verschwenkbar. Der von der Luft zu durchströmenden Öffnung sind bei den bekannten Lösungen mehrere verschwenkbare Schließlamellen zugeordnet. Ein Beispiel für eine derartige Anordnung zeigt die DE 10 2009 014 003 A1. Die steuerbare Luftzufuhr dieser Lösung zeigt zwei nebeneinander liegende Öffnungen, wobei in jeder Öffnung drei um parallel zueinander angeordnete Achsen verschwenkbare Schließlamellen angeordnet sind. Die Ebenen der beiden Öffnungen schließen einen spitzen Winkel ein, d.h. die beiden Öffnungen liegen nicht in einer Ebene. Entsprechend verlaufen auch die Schwenkachsen der Schließlamellen in den beiden Öffnungen zueinander.

Beim der Einrichtung gemäß EP 2 407 333 A1) ist ein Druck-Schubelement als Übertragungselement vorgesehen, welches der Verschwenkung einer Anzahl von verschwenkbar gelagerter Schließelementen dient. Jedes Schließelement ist mit einem außerhalb der Schwenkachse angeordneten Gelenkteil des Übertragungselementes verbunden.
Die DE 10 2007 053 531 A1 zeigt eine als Rolloeinrichtung ausgebildete Abschaltung einer Luftzufuhr in einem Fahrzeug. Die einzelnen Schließelemente, Lamellen sind zu einer Kette, einem Rollo zusammengefügt, entsprechend gelenkig miteinander verbunden und in einer Führung geführt. Getrieben wird dieses Rollo durch eine Welle, welches ein Kettenrad aufweist.
Um die Schließlamellen in den beiden nebeneinander liegenden Öffnungen zu verstellen ist als Aktuator ein Betätigungselement vorgesehen, welches über einen Mechanismus auf die einzelnen Elemente gemeinsam einwirkt und so eine Gesamtverstellung der Schließelemente bewirkt.
Die DE 20 2005 010 683 U1 zeigt einen Lamellenvorhang, bestehend aus einer Anzahl einer Öffnung zugeordneter Lamellen, welche von einem Aktuator aus betätigt, verschwenkt werden. Als Übertragungselement der Betätigungsbewegung ist ein nicht näher beschriebenes Gestänge oder Zugmittel angegeben. US1699020A zeigt einen Kühlergrill mit verschließbaren Lamellen, wobei ein Übertragungselement einteilig die Verstellung der Lamellen bewirkt. Insbesondere zeigt die US 1699020 A ein Übertragungselement für den steuerbaren Lufteinlass eines Kraftfahrzeuges, wobei das Übertragungselement der Erzeugung einer Schwenkbewegung einer Anzahl von angelenkten und schwenkbar gelagerten Schließelementen dient, wobei jedes Schließelement mit einem außerhalb der Schwenkachse angeordneten Gelenkteil mit einem Gelenkelement des Übertragungselementes verbunden ist, wobei das Übertragungselement als länglicher und zur Übertragung von Zug- und Schubkräften geeigneter Körper ausgebildet ist und die Gelenkelemente biegeelastisch gegenüber diesem Körper angeordnet sind, wobei das Übertragungselement strukturell aus Einzelkörpern besteht, welche an sich verjüngende Stegen miteinander verbunden sind und wobei die Gelenkelemente in den als Stegen ausgebildeten Verbindungsbereichen zweier Körper angeordnet sind.

DE102008061054 A1 zeigt einen Luftklappenantrieb, dessen Getriebebauteile aus Kunststoff bestehen.
Die Aufgabe der vorliegenden Erfindung besteht darin, ein Übertragungselementgegenüber den bekannten Ausführungen verbesserter Ausführung zu schaffen. Diese Aufgabe wird gelöst durch die Merkmale von Anspruch 1. Weiterbildungen ergeben sich aus den Unteransprüchen.
Gemäß der Erfindung ist ein Übertragungselement für den steuerbaren Lufteinlass eines Kraftfahrzeuges vorgesehen, welches der Erzeugung einer Schwenkbewegung einer Anzahl von angelenkten und schwenkbar gelagerten Schließelementen dient, wobei jedes Schließelement mit einem außerhalb der Schwenkachse angeordneten Gelenkteil mit einem Gelenkelement des Übertragungselementes verbunden ist, wobei das Übertragungselement als länglicher und zur Übertragung von Zug- und Schubkräften geeigneter Körper ausgebildet ist und die Gelenkelemente biegeelastisch gegenüber dem Körper angeordnet sind.

Gemäß der Erfindung ist ein einstückig und als Kunststoffformteil ausgeführtes Übertragungselement vorgesehen, welches sich aus einzelnen halbschalenförmigen Körpern zusammensetzt und in den biegeelastischen Verbindungsbereichen der einzelnen Körper die den Schließelementen zugeordneten Gelenkelemente aufweist.
Gemäß einer Ausführungsform der Erfindung weisen die einzelnen Schließelemente je einen außerhalb der Schwenkachse und parallel zu dieser orientierten Gelenkzapfen auf, der in ein als Auge ausgebildetes Gelenkelement, eine Zapfenaufnahme des Übertragungselementes eingreift. Das Gelenkelement, die Zapfenaufnahme ist in dem Übergangsbereich der halbschalenförmigen Körper angeordnet. Vorzugsweise sind die halbschalenförmigen Körper über je ein Paar Stege miteinander verbunden und die Zapfenaufnahmen in diesem Übergangsbereich angeordnet.
Mit dem erfindungsgemäßen Übertragungselement gelingt eine einfach ausführbare Übertragung der Betätigungskraft eines Aktuators auf eine Anzahl schwenkbar gelagerter Schließelemente. Das Übertragungselement ist dazu an einer Seite eines die Schließlamellen lagernden Rahmens angeordnet und verschiebbar gelagert. Die Schließlamellen weisen je einen außerhalb der Schwenkachse angeordneten Zapfen auf, der in je eine Gelenkaufnahme des Übertragungselementes eingreift. Eine Verschiebebewegung des Übertragungselementes erzeugt so eine gemeinsame Verschwenkbewegung der einzelnen Schleißlamellen.

Durch die biegeelastische Anordnung der als Zapfenaufnahmen gestalteten Gelenkelemente ist es möglich, mit dem erfindungsgemäßen Übertragungselement auch Schließlamellen zu betätigen, der Schwenkachsen nicht parallel zueinander verlaufen.

Insbesondere ist es möglich, bei einer steuerbaren Luftzufuhr mit zwei nebeneinander liegenden Luftzufuhröffnungen die den beiden Öffnungen zugeordneten Schließlamellen mit einem mittig angeordnetem Übertragungselement zu betätigen. Entsprechend weist das Übertragungselement beidseitig die biegeelastischen Gelenkelemente in Form der Zapfenaufnahmen auf.

Des Weiteren erfolgt die Erläuterung eines Ausführungsbeispiels der Erfindung an Hand der Zeichnungen.

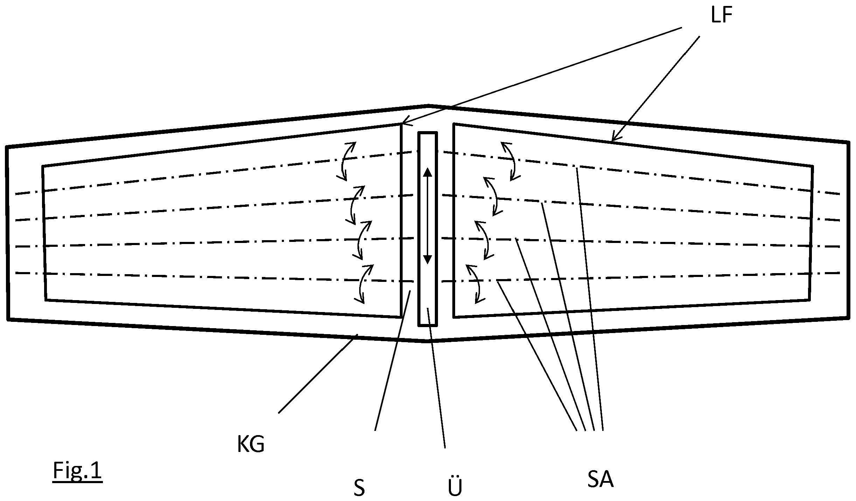

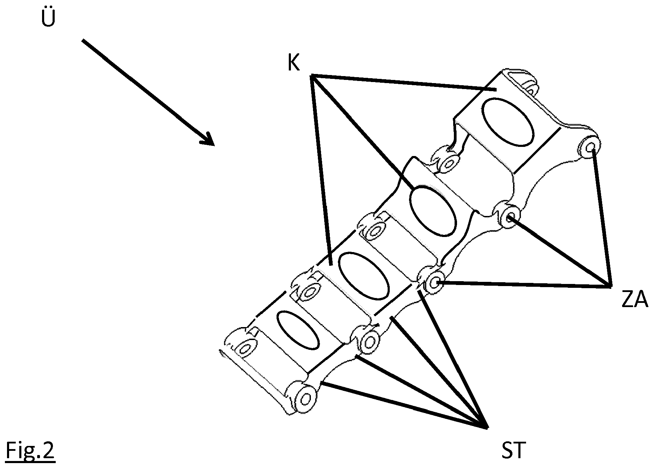

Figur 1 zeigt den Rahmen eines Kühlergrill KG mit zwei Luftdurchtrittsöffnungen LF. Den Luftdurchtrittsöffnungen LF sind eine Anzahl Schließelemente in Form von um je eine Schwenkachse SA gelagerter Lamellen zugeordnet. Die Lamellen sind in der Figur 1 nicht dargestellt.

Wie in Figur 1 ersichtlich verlaufen die einzelnen Schwenkachsen SA in den beiden Luftdurchtrittsöffnungen LF unter einem Winkel zueinander. Insbesondere müssen die Schwenkachsen SA in den beiden Luftdurchtrittsöffnungen LF nicht in einer gemeinsamen Ebene liegen. Letztlich können die beiden Luftdurchtrittsöffnungen LF - die zugeordneten Ebenen - sich in Fahrtrichtung des Fahrzeuges in einem Winkel schneiden. Der die einzelnen Schleißlamellen schwenkbar lagernd tragende Rahmen KG ist dabei entweder direkt in dem Kühlergrill des Fahrzeuges angeordnet - auf der dem Designbereich der Kühlergrills abgewandten Seite, oder nachgeordnet in der Karosserie selbst.

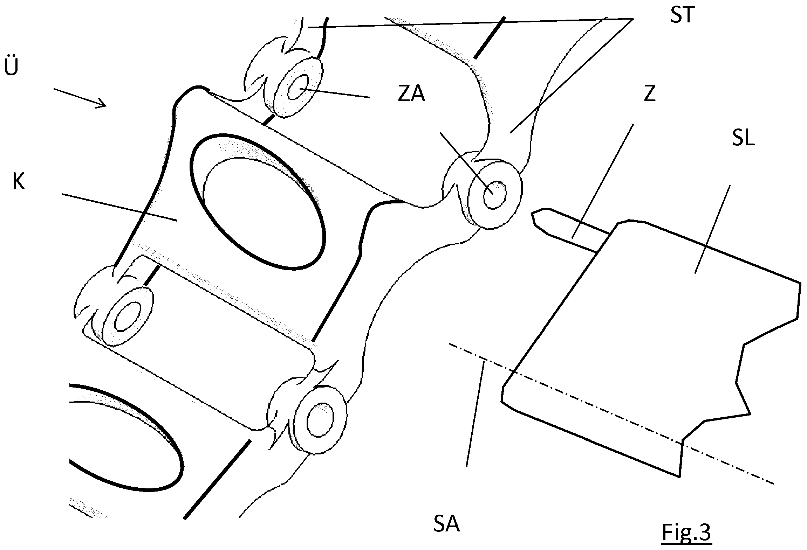

Der Rahmen des Kühlergrills KG weist mittig einen die beiden Luftdurchtrittsöffnungen LF trennende Strebe S auf. In dieser Strebe S sind die entsprechenden Lamellenenden schwenkbar gelagert. In Erstreckungsrichtung dieser Strebe S ist ein Übertragungselement Ü verschiebbar gelagert. Das Übertragungselement Ü ist hierbei mit jedem der Schließlamellen SL über je einen außerhalb der Schwenkachse SA angeordneten und in Richtung Übertragungselement weisenden Zapfen Z verbunden (Figur 3).

Das Übertragungselement Ü ist als ein einstückiges Kunststoffteil gefertigt und strukturell aus einzelnen halbschalen- bzw. U-förmigen Körpern K zusammengesetzt. Die einzelnen Körper K sind je durch ein Paar Verbindungsstege ST miteinander verbunden, wobei jeder Verbindungssteg ST mittig eine Zapfenaufnahme ZA als Gelenkelement aufweist. Die Stege ST des zugeordneten Körpers K sind in Richtung der Zapfenaufnahme ZA sich verjüngend gestaltet, so dass die jeweilige Zapfenaufnahme ZA biegeelastisch gegenüber dem durch die Körper K gebildeten Übertragungselement gelagert ist.

Das beschriebene Übertragungselement Ü ist durch seine Gestaltung hinreichen druck- bzw. zugsteif, gleichzeitig aber torsions- und biegeweich. Das Übertragungselement Ü kann somit sowohl in einer geraden als auch eine gekrümmten Richtung verschiebend wirken, also insbesondere auf einer Strebe S, welche gemäß Figur 1 bogenförmig gegenüber der Zeichnungsebene verläuft. Die einzelnen Zapfenaufnahmen ZA als zwischen den Körpern K angeordneten Gelenkelemente vermögen sich entsprechend der Biegeelastizität an auch nicht senkrecht zur Erstreckungsrichtung des Übertragungselementes Ü gelagerte Schließlamellen SL (deren Zapfen Z) anzupassen.

### Bezugszeichenliste

- KG: Kühlergrill, Rahmen
- LF: Luftdurchtrittsöffnung
- SA: Schwenkachse (Schließelement, Schleißlamelle, Lamelle)
- S: Strebe
- Ü: Übertragungselement
- K: Körper (Übertragungselement)
- ST: Steg
- ZA: Zapfenaufnahme
- Z: Zapfen (Schließelement, Schleißlamelle, Lamelle)
- SL: Schließelement, Schließlamelle, Lamelle

## Patentansprüche

1. Übertragungselement für den steuerbaren Lufteinlass eines Kraftfahrzeuges, wobei das Übertragungselement (Ü) der Erzeugung einer Schwenkbewegung einer Anzahl von angelenkten und schwenkbar gelagerten Schließelementen (SL) dient, wobei jedes Schließelement (SL) mit einem außerhalb der Schwenkachse angeordneten Gelenkteil (Z) mit einem Gelenkelement (ZA) des Übertragungselementes (Ü) verbunden ist, wobei das Übertragungselement (Ü) als länglicher und zur Übertragung von Zug- und Schubkräften geeigneter Körper (K) ausgebildet ist und die Gelenkelemente (ZA) biegeelastisch gegenüber diesem Körper (K) angeordnet sind, **dadurch gekennzeichnet, dass** das Übertragungselement (Ü) strukturell aus einer Vielzahl von Körpern (K) zusammengesetzt ist, welche über sich verjüngende Stege (ST) miteinander verbunden sind, und wobei die Gelenkelemente (ZA) in dem als Steg (ST) ausgebildeten Verbindungsbereich zweier Körper (K) angeordnet sind und das Übertragungselement (Ü) als ein einstückiges Kunststoffteil gefertigt ist.

2. Übertragungselement nach Anspruch 1,dadurchgekennzeichent, dass die Gelenkelemente (ZA) als eine Zapfenaufnahme für einen an dem Schließelement angebrachten Zapfen (Z) ausgebildet sind.

## Claims

1. Transmission element for the controllable air inlet of a motor vehicle, wherein the transmission element (Ü) serves to produce a pivoting movement of a number of coupled and pivotably mounted closing elements (SL), wherein each closing element (SL) is connected by a link part (Z), which is arranged outside the pivot axis, to a link element (ZA) of the transmission element (Ü), wherein the transmission element (Ü) is designed as an elongate body (K) suitable for transmitting tensile and shearing forces, and the link elements (ZA) are arranged in a flexurally elastic manner in relation to said body (K), **characterized in that** the transmission element (Ü) is composed structurally from a multiplicity of bodies (K) which are connected to one another via tapering webs (ST), and wherein the link elements (ZA) are arranged in the connecting region of two bodies (K), said connecting region being designed as a web (ST), and the transmission element (Ü) is manufactured as a single-piece plastics part.

2. Transmission element according to Claim 1, **characterized in that** the link elements (ZA) are designed as a pin receptacle for a pin (Z) attached to the closing element.

## Revendications

1. Élément de transmission pour l'admission d'air commandable d'un véhicule automobile, l'élément de transmission (Ü) servant à générer un mouvement de pivotement d'une pluralité d'éléments de fermeture (SL) articulés et supportés de manière pivotante, chaque élément de fermeture (SL) étant connecté par une partie d'articulation (Z) disposée à l'extérieur de l'axe de pivotement à un élément d'articulation (ZA) de l'élément de transmission (Ü), l'élément de transmission (Ü) étant réalisé sous forme de corps (K) allongé et approprié pour le transfert de forces de traction et de poussée et les éléments d'articulation (ZA) étant disposés de manière élastiquement flexible par rapport à ce corps (K), **caractérisé en ce que** l'élément de transmission (Ü) est constitué structurellement d'une pluralité de corps (K) qui sont connectés les uns aux autres par le biais de nervures se rétrécissant (ST), et les éléments d'articulation (ZA) étant disposés dans la région de connexion de deux corps (K) réalisée sous forme de nervure (ST) et l'élément de transmission (Ü) étant fabriqué sous forme de pièce en plastique monobloc.

2. Élément de transmission selon la revendication 1, **caractérisé en ce que** les éléments d'articulation (ZA) sont réalisés sous forme de logement de tourillon pour un tourillon (Z) monté sur l'élément de fermeture.
